# EUROPEAN PATENT SPECIFICATION

(11) **EP 1 837 724 B1**
(45) Date of publication and mention of the grant of the patent: **28.10.2009**
(21) Application number: 06425202.6
(22) Date of filing: 24.03.2006
(51) Int. Cl.: G05B 19/31

(54) **Positive yarn feeder for textile machines, with feedback-controlled synchronous motor**
Positive Garnlieferungsvorrichtung für Textilmaschinen, mit rückkopplungsgesteuertem Synchronmotor
Dispositif d'alimentation du fil pour machines textiles, avec moteur synchrone commandé en boucle fermée

(43) Date of publication of application: 26.09.2007
(73) Proprietor: L.G.L. Electronics S.p.A., 24024 Gandino (Bergamo) (IT)
(72) Inventor: Gotti, Andrea, 24021 Albino (BG) (IT); Ruggeri, Mirko, 24026 Leffe (BG) (IT)
(74) Representative: Spandonari, Carlo

(56) References cited:
- WO-A-2004/038907
- DE-A1- 19 949 106
- GB-A- 2 305 033

## Description

The present invention relates to a positive yarn feeder for textile machines and the like, with synchronous motor controlled by voltage or by speed, and more particularly to a feedback control unit for said yarn feeder.

As known, the yarn feeders of the above type usually draw the yarn from a spool and feed it with a regulated speed and tension to a machine arranged downstream, such as a loom, a knitting machine, a spooler, and the like. The feeder comprises a motor, such as a stepping motor or, more advantageously, a brushless motor, which drives a yarn-feeding reel on which a number of yarn loops are wound. Speed sensors and/or position sensors are associated to the motor, which allow the motor speed to be controlled by a feedback loop. In particular, the motor is driven by an electronic power supply unit consisting of a bridge of electronic switches controlled by a control unit which processes various signals from external sensors, such as yarn tension signals, voltage signals and/or current signals deriving from the driving of the motor, as well as the feedback signals from said speed sensors and/or position sensors. On the basis of such signals, the control unit cyclically closes the switches of the electronic power supply unit in order to control the motor speed and, consequently, the yarn speed, which is proportional to the motor speed.

As well known to the person skilled in the art, in the specific case of synchronous motors, the instantaneous position of the rotor must be measured in order to perform the feedback control of the motor. In particular, the more accurate and definite the measuring of the position, the more accurate and uniform the speed control for the motor will be, with reduction of the well-known torque "ripple" phenomena, which limit the passband of the control system, thereby affecting the accuracy of the yarn-feeding process with consequent flaws in the evenness of the fabric or mesh.

To this purpose, it is known to provide the positive yarn feeders with sophisticated position sensors featuring a high ratio between position-measuring resolution and diameter of the reel. However, these high-resolution sensors are very expensive and have the further drawback of including mechanical elements which rotate integrally with the rotor, thereby increasing the moment of inertia of the rotor, and consequently affecting the responsiveness of the motor to accelerations/decelerations.

A less expensive control system, which is typically used in positive yam feeders provided with three-phase brushless motors, makes use of three digital Hall sensors which are arranged within the motor and are connected for sending position signals to the control unit. The drawback of this system for measuring the angular position of the rotor is that it has a low resolution, with consequent rising of the above-cited ripple phenomena. In fact, by combining the signals from the three sensors, 6xN angular positions per mechanical revolution can be identified at the most, where N is the number of pairs of pole shoes.

WO 2004/038907 A1 describes a sensor system for the vector control of a permanent magnet, synchronous motor associated to a negative thread-feeding appliance. In this document, sector permanent magnets having the same polarities are rotatably driven by the rotor of the motor and are homogeneously distributed about 360°.Two fixed Hall sensors aligned along the orbit of the sector permanent magnets are interspaced in the direction of rotation in such a way that each sector permanent magnet temporarily activates at least two of the Hall sensors at the same time. A zero permanent magnet 14 is provided for bypassing at least one of the Hall sensors. The sector permanent magnets associated to the rotor increase the moment of inertia of the latter, thereby affecting the responsiveness of the motor.
GB 2 305 033 A describes a brushless DC motor controller having electronic switches to control the current flow in each phase of the motor. Hall sensors are used to detect certains positions of the magnet flux of the motor. The switches are turned on or off by outputs from a commutation circuit decoding the outputs from the Hall sensors. A Phase Resetting voltage controlled oscillator predicts the angle between sensors events, and this is compared to a start angle and an angle which will be set for maximum power output. These comparisons are then used in a gated bistable circuit to generate the switch control signals. A period based phase correction loop controls, via a phase advance duration control, a commutation logic which switches the phases of the motor, the latter being PWM controlled.

It is a main object of the present invention to enhance the accuracy and the uniformity of the speed control process in position-measuring systems using chip position sensors of a simple design, such as the digital Hall sensors, whereby the torque ripple in the motor which drives the yarn-feeding reel is considerably reduced, or even deleted.

The above object and other advantages, which will better appear from the following description, are achieved by a positive yarn feeder having the features recited in claim 1, while the other claims state other advantageous features of the invention.

The invention will be now described in more detail, with reference to a preferred embodiment shown by way of non-limiting example in the attached drawings, wherein:
Fig. 1 is a general diagram of a positive yarn feeder of the type to which the invention is referred;
Fig. 2 is a block diagram of a portion of the control unit according to the invention;
Fig. 3 is a time diagram showing the real angular position of the motor and the angular position calculated by the control unit according to the invention.

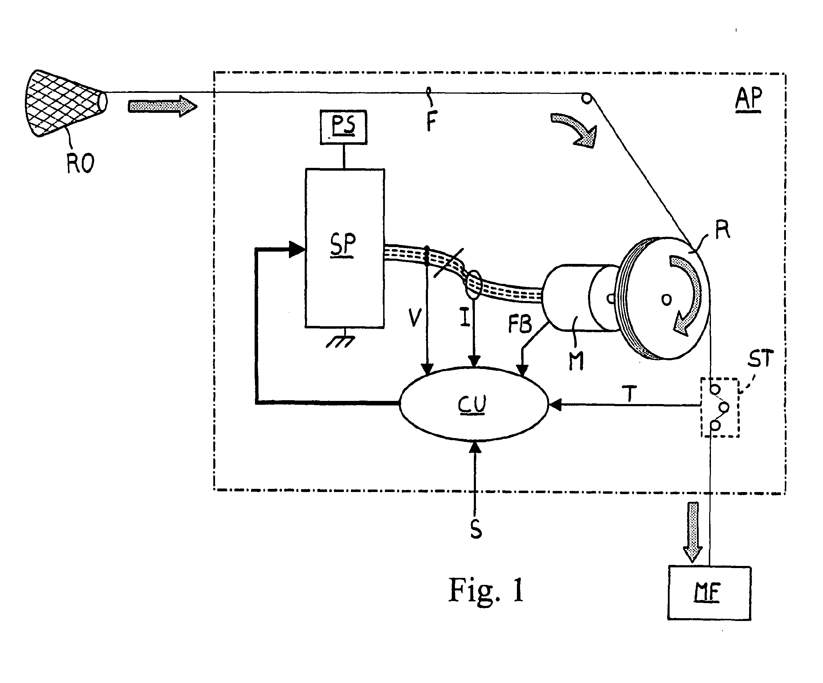

In Fig. 1, a positive yarn feeder AP draws yarn F from a spool RO and feeds the yarn to a machine MF, such as a loom, a knitting machine, a spooler, and the like, at a regulated speed and a regulated tension. Yarn F drawn from spool RO is wound into a plurality of loops on a yarn-winding reel R keyed to the driving shaft of a motor M, then passes through a tension sensor ST and finally is fed to machine MF.

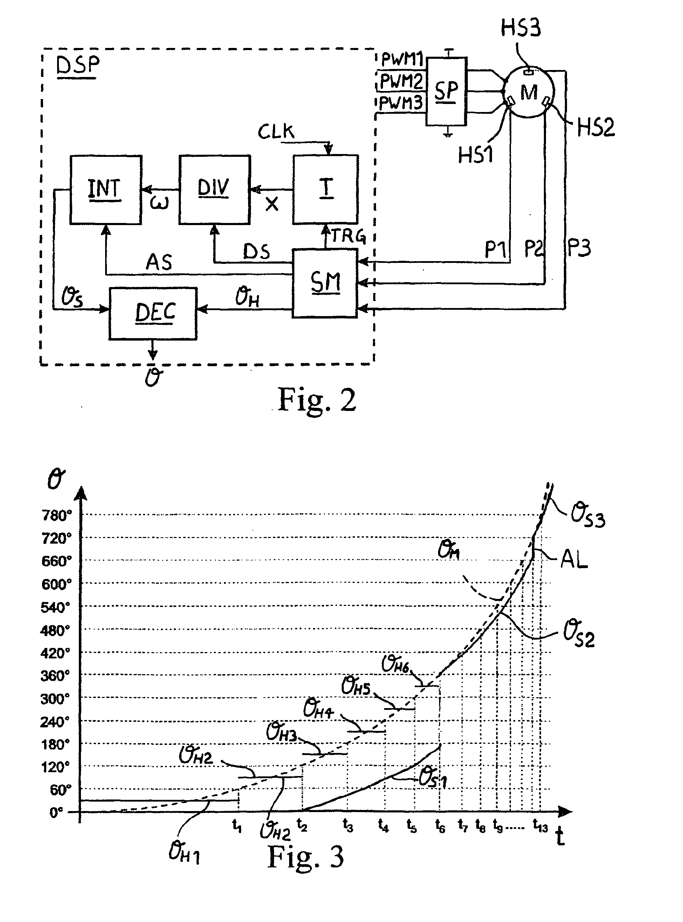

Motor M is a permanent-magnet, synchronous brushless motor with sinusoidal counter-electromotive force, which is driven by a power supply unit PS via a three-phase switching bridge SP provided with electronic switches. Three-phase switching bridge SP is driven by triads of preferably sinusoidal, modulated digital signals PWM1, PWM2, PWM3 (Fig. 2), which are generated by a microcontroller or digital signal processor DSP. Microcontroller DSP is incorporated in a control unit CU which receives a tension signal T concerning yarn F from sensor ST, voltage signals V and current signals I deriving from the driving of the motor, feedback signals FB from position sensors associated to the motor for the feedback control of the motor, as described in more detail below, as well as general external signals S. On the basis of such signals, control unit sends the above-mentioned modulated digital signals to bridge SP in order to obtain the desired yarn speed and yarn tension.

Having now particular reference to Fig. 2, motor M bears three digital Hall sensors HS1, HS2, HS3 mutually spaced at equal angles of 120° around the rotor and connected for sending position pulses P1, P2, P3 (above generally referred to as position signals FB) to microcontroller DSP. As well known to the person skilled in the art, six different combinations can be obtained by combining the signals generated by the triad of sensors at each switching of the sensors, each combination corresponding to an electrical angular position of the motor. Consequently, the number of measured angular positions per mechanical revolution is calculated by multiplying the number of pairs of pole shoes by six. Microcontroller DSP comprises a state machine SM which receives the position pulses P1, P2, P3 from the Hall sensors and assigns a specific state, i.e., a specific electrical angular position, to each combination, thereby generating a measured position signal θ_{H} which is accurate but has a low resolution, with only six position data per electrical revolution. The state machine also generates a direction signal DS, which indicates the direction of rotation, as well as an alignment signal AS. The latter is generated to coincide with one - or more - of the switching of the Hall sensors, at least once a mechanical revolution. The use of signals DS and AS will be decribed in more detail below.

In order to estimate the intermediate angular positions between the positions measured by the three Hall sensors, state machine SM, during the intervals between two successive states, generates a trigger signal TR which drives a timer T piloted by a clock signal CLK at high frequency. This allows the time interval between two successive electrical angular positions to be measured with high accuracy. Timer T sends a time interval signal X to a divisor block DIV.

Divisor block DIV calculates the instantaneous speed ω of the motor by inverting time interval X. In divisor block DIV, the sign of the calculated speed is also made concordant with signal DS, which is generated by the state machine and indicates the direction of rotation. Divisor block DIV then sends speed signal ω to a fixed-frequency, integrating filter INT that calculates the angular positions θ_{S} of the motor, on the basis of speed ω, in the intervals between the measured angular positions θ_{H}, by integration. Integrating filter INT, on the basis of alignment signals AS generated by the state machine at predetermined positions, alignes the calculated position θ_{S} to the measured position θ_{H}. In fact, as well known to the person skilled in the art, since calculated position θ_{S} is calculated by integrating a filtered, sampled speed signal, it could be affected by phase delays and time delays which, if not compensated by an alignment operation, could affect the calculation of the angular position with errors.

Finally, a decision block DEC receives measured position signal θ_{H} and calculated position signal θ_{S}, and chooses the one that represents the better estimate as a pilot position signal θ to be sent to a sinusoidal, voltage/current control loop (not shown) which drives the motor. In order to choose which of the two position signals θ_{H} e θs is the best estimate, decision block makes the difference between said signals θ_{H} e θs and compares the absolute value of the result with a predetermined treshold value. If the result of the difference is below the treshold value, then the decision block selects calculated position signal θ_{S} as the best estimate to be used as pilot position signal θ, otherwise it selects measured position signal θ_{H}.

In the diagram of Fig. 3, broken line θ_{M} represents the curve of the angular position of the rotor during a transient of acceleration starting from a rest position. The position calculated by microprocessor DSP is represented by continuous lines. During the first electrical revolution of 360°, the difference between the calculated angular position θ_{S1} and the measured angular position θ_{H} exceeds the predetermined treshold value, which in the example is assumed to be 30°, due to the high acceleration. In particular, the initial calculated position is zero and also the initial calculated speed is zero. At time t1, the first trigger signal is generated. The calculated position is not modified because, if the speed is equal to zero, the position is updated only at the alignment, while two successive trigger signals are required for updating the speed. At time t2, the second trigger signal is generated, the speed is changed into the average value over the time interval t1 to t2, and the calculated position is updated by integrating the speed. At time t3, the third trigger signal is generated, the speed is changed into the average value over the time interval t2 to t3, and the calculated position is consequently updated. As it clearly appears from the diagram of Fig. 3, the error during the first electrical revolution is of 90° and more, which error is not acceptable for the dynamic control of the motor. Therefore, during the first electrical revolution, decision block DEC selects the discrete position signals θ_{H} as the best estimate. After the first revolution, on the contrary, the speed stabilizes and the best estimate is given by calculated angular position θ_{S2}. Since the latter is calculated by integration, it is affected by phase delays and time delays, as mentioned above. Therefore, as shown in Fig. 3, after further 360° the calculated position signal is brought to the level of, i.e., aligned to, alignment signal AS generated by the state machine. In the example of the diagram, the alignment is represented by the vertical step AL during the transient from the last state (660°) to the first state (720°, start of a new revolution, line θ_{S3}), but of course the decision block could be programmed to perform the alignment during the transition between two different states, even more than once a revolution.

The pilot position value θ calculated as above can be used for the sinusoidal control by voltage or by current of the motor, in a way known per se.

A preferred embodiment of the invention has been described herein, but of course many changes may be made by the person skilled in the art within the scope of the inventive concept. For example, although in the above example digital Hall sensors have been used, other types of position sensors can be used, such as optical sensors arranged inside or outside the motor. Of course, the functional blocks to which the description is referred can be implemented by software in a computerized control system, rather then by physical devices.

## Claims

1. A positive yam feeder for textile machines, comprising
- a synchronous motor (M) having a rotor to which a yarn-winding reel (R) is connected,
- a plurality of position sensors (HS1, HS2, HS3) arranged to detect the passing of the rotor at predetermined angular positions and to generate corresponding position pulses (P1, P2, P3), and
- a control unit (CU) which is programmed to assign a corresponding measured angular position (θ_{H}) to each combination of the position pulses (P1, P2, P3), and is connected to drive the motor by feedback with pilot position values (θ) deriving from said measured angular positions (θ_{H}),
**characterized in that** said control unit (CU) also is programmed to calculate the angular positions of the motor in the intervals between the measured angular positions (θ_{H}) by integration of a speed signal (ω) deriving from the measuring of the time intervals between successive measured angular positions (θ_{H}), and comprises a decision block (DEC) which is programmed to make the difference between the measured angular positions (θ_{H}) and the corresponding calculated angular positions (θ_{S}) and to compare the absolute value of said difference with a predetermined treshold value, whereby, if the absolute value of the difference is below said treshold value, then the decision block selects the calculated position signal (θ_{S}) as pilot position signal (θ), otherwise it selects the measured position signal (θ_{H}).

2. The positive yarn feeder of claim 1, **characterized in that** said time intervals are calculated by a timer (T) piloted by a clock signal at high frequency and driven by a trigger signal (TRG) generated during the intevals between successive measured angular positions.

3. The positive yarn feeder of claim 1 or 2, **characterized in that** said control unit (CU) is programmed to align the calculated angular position (θ_{S}), at least once a revolution of the motor, to the measured angular position (θ_{H}), on the basis of a alignement signal (AS) generated to coincide with one switching of the position sensors.

4. The positive yarn yarn feeder of any of claims 1 to 3, **characterized in that** said synchronous motor (M) is a three-phase motor.

5. The positive yarn feeder of any of claims 1 to 4, **characterized in that** said synchronous motor (M) has a sinusoidal counter-electromotive force.

6. The positive yarn feeder of claim 5, **characterized in that** it comprises three of said position sensors mutually spaced at equal angles of 120° around the rotor.

7. The positive yam feeder of any of claims 1 to 6, **characterized in that** said position sensors are Hall sensors (HS1, HS2, HS3).

8. The positive yarn feeder of any of claims 1 to 7, **characterized in that** said pilot position value (θ) is used for the sinusoidal control by voltage of the motor (M).

9. The positive yam feeder of any of claims 1 to 7, **characterized in that** said pilot position value (θ) is used for the sinusoidal control by current of the motor (M).

## Patentansprüche

1. Aktiver Garnzuführer für Textilmaschinen, mit
- einem Synchronmotor (M), der einen Rotor aufweist, mit dem eine Garnaufwickelspule (R) verbunden ist,
- mehreren Positionssensoren (HS1, HS2, HS3), die zum Erfassen des Vorbeilaufens des Rotors an vorbestimmten Winkelpositionen und zum Erzeugen entsprechender Positionsimpulse (P1, P2, P3) angeordnet sind, und
- einer Steuereinheit (CU), die dazu programmiert ist, jeder Kombination der Positionsimpulse (P1, P2, P3) eine entsprechende gemessene Winkelposition (θ_{H}) zuzuweisen und dazu angeschlossen ist, den Motor durch Rückführung mit Pilotpositionswerten (θ) anzutreiben, die aus den gemessenen Winkelpositionen (θ_{H}) stammen,
**dadurch gekennzeichnet, dass** die Steuereinheit (CU) auch dazu programmiert ist, die Winkelstellungen des Motors in den Intervallen zwischen den gemessenen Winkelpositionen (θ_{H}) durch Integration eines Geschwindigkeitssignals (ω) zu berechnen, das aus dem Messen der Zeitintervalle zwischen aufeinanderfolgenden gemessenen Winkelpositionen (θ_{H}) stammt, und einen Entscheidungsblock (DEC) aufweist, der dazu programmiert ist, den Unterschied zwischen den gemessenen Winkelpositionen (θ_{H}) und den entsprechenden berechneten Winkelstellungen (θ₅) zu bestimmen und den Absolutwert des Unterschieds mit einem vorbestimmten Schwellenwert zu vergleichen, wodurch dann, wenn der Absolutwert des Unterschieds unterhalb des Schwellenwertes ist, der Entscheidungsblock das berechnete Positionssignal (θ_{S}) als Pilotpositionssignal (θ) auswählt und er ansonsten das gemessene Positionssignal (θ_{H}) auswählt.

2. Aktiver Garnzuführer nach Anspruch 1, **dadurch gekennzeichnet, dass** die Zeitintervalle von einem Timer (T) berechnet werden, der durch ein Taktsignal mit hoher Frequenz gesteuert und durch ein Auslösesignal (TRG) angetrieben ist, das während der Intervalle zwischen aufeinanderfolgenden gemessenen Winkelpositionen erzeugt wird.

3. Aktiver Garnzuführer nach Anspruch 1 oder 2, **dadurch gekennzeichnet, dass** die Steuereinheit (CU) dazu programmiert ist, die berechnete Winkelstellung (θ_{S}) zumindest einmal pro Umdrehung des Motors mit der gemessenen Winkelposition (θ_{H}) auf der Grundlage eines Abgleichsignals (AS) abzugleichen, das zum Übereinstimmen mit einem Schalten der Positionssensoren erzeugt wird.

4. Aktiver Garnzuführer nach einem der Ansprüche 1 bis 3, **dadurch gekennzeichnet, dass** der Synchronmotor (M) ein Drehstrommotor ist.

5. Aktiver Garnzuführer nach einem der Ansprüche 1 bis 4, **dadurch gekennzeichnet, dass** der Synchronmotor (M) eine sinusförmige gegenelektromotorische Kraft hat.

6. Aktiver Garnzuführer nach Anspruch 5, **dadurch gekennzeichnet, dass** er drei der genannten Positionssensoren aufweist, die gegenseitig unter gleichen Winkeln von 120° um den Motor herum voneinander beabstandet sind.

7. Aktiver Garnzuführer nach einem der Ansprüche 1 bis 6, **dadurch gekennzeichnet, dass** die Positionssensoren Hall-Sensoren (HS1, HS2, HS3) sind.

8. Aktiver Garnzuführer nach einem der Ansprüche 1 bis 7, **dadurch gekennzeichnet, dass** der Pilotpositionswert (θ) zur sinusförmigen Steuerung des Motors (M) mittels Stromspannung verwendet wird.

9. Aktiver Garnzuführer nach einem der Ansprüche 1 bis 7, **dadurch gekennzeichnet, dass** der Pilotpositionswert (θ) zur sinusförmigen Steuerung des Motors (M) mittels Stromstärke verwendet wird.

## Revendications

1. Dispositif d'alimentation positive en fil pour machines textiles, comprenant :
- un moteur synchrone (M) possédant un rotor auquel est relié un dévidoir à fil (R),
- une pluralité de capteurs de position (HS1, HS2, HS3) agencés pour détecter le passage du rotor dans des positions angulaires prédéterminées et pour produire des impulsions de position correspondantes (P1, P2, P3), et
- une unité de commande (CU) qui est programmée pour attribuer une position angulaire mesurée correspondante (θ_{H}) à chaque association des impulsions de position (P1, P2, P3), et est connectée pour entraîner le moteur par rétroaction avec des valeurs de position pilote (θ ) dérivées desdites positions angulaires mesurées (θ_{H}),
**caractérisé en ce que** ladite unité de commande (CU) est également programmée pour calculer les positions angulaires du moteur dans les intervalles entre les positions angulaires mesurées (θ_{H}) par intégration d'un signal de vitesse (θ) dérivé de la mesure des intervalles de temps entre des positions angulaires mesurées successives (θ_{H}), et comprend un bloc de décision (DEC) qui est programmé pour distinguer entre les positions angulaires mesurées (θ_{H}) et les positions angulaires calculées correspondantes (θ_{S}) et pour comparer la valeur absolue de ladite distinction à une valeur de seuil prédéterminée, moyennant quoi, si la valeur absolue de la distinction est inférieure à ladite valeur de seuil, alors le bloc de décision sélectionne le signal de position calculée (θ_{S}) en tant que signal de position pilote (θ), autrement il sélectionne le signal de position mesurée (θ_{H}).

2. Dispositif d'alimentation positive en fil selon la revendication 1, **caractérisé en ce que** lesdits intervalles de temps sont calculés par une minuterie (T) pilotée par un signal d'horloge à haute fréquence et entraînée par un signal de déclenchement (TRG) produit au cours des intervalles entre des positions angulaires mesurées successives.

3. Dispositif d'alimentation positive en fil selon la revendication 1 ou 2, **caractérisé en ce que** ladite unité de commande (CU) est programmée pour aligner la position angulaire calculée (θ_{S}), au moins une fois par révolution du moteur, avec la position angulaire mesurée (θ_{H}), sur la base d'un signal d'alignement (AS) produit pour coïncider avec une commutation des capteurs de position.

4. Dispositif d'alimentation positive en fil selon une quelconque des revendications 1 à 3, **caractérisé en ce que** ledit moteur synchrone (M) est un moteur triphasé.

5. Dispositif d'alimentation positive en fil selon une quelconque des revendications 1 à 4, **caractérisé en ce que** ledit moteur synchrone (M) possède une force contre-électromotrice sinusoïdale.

6. Dispositif d'alimentation positive en fil selon la revendication 5, **caractérisé en ce qu'**il comprend trois desdits capteurs de position mutuellement espacés à des angles égaux de 120° autour du rotor.

7. Dispositif d'alimentation positive en fil selon une quelconque des revendications 1 à 6, **caractérisé en ce que** lesdits capteurs de position sont des capteurs à effet Hall (HS1, HS2, HS3).

8. Dispositif d'alimentation positive en fil selon une quelconque des revendications 1 à 7, **caractérisé en ce que** ladite valeur de position pilote (θ) est utilisée pour la régulation sinusoïdale par tension du moteur (M).

9. Dispositif d'alimentation positive en fil selon une quelconque des revendications 1 à 7, **caractérisé en ce que** ladite valeur de position pilote (θ) est utilisée pour la régulation sinusoïdale par courant du moteur (M).
